# EUROPEAN PATENT SPECIFICATION

(11) **EP 3 712 440 B1**
(45) Date of publication and mention of the grant of the patent: **19.06.2024**
(21) Application number: 20159325.8
(22) Date of filing: 25.02.2020
(51) Int. Cl.: F04D 29/42, F04D 27/02, F04D 29/02

(54) **TURBOCHARGER COMPRESSOR HOUSING**
TURBOLADERVERDICHTERGEHÄUSE
CARTER DE COMPRESSEUR DE TURBOCOMPRESSEUR

(30) Priority: 21.03.2019 GB 201903892
(43) Date of publication of application: 23.09.2020
(73) Proprietor: Ford Global Technologies, LLC, Dearborn, MI 48126-2738 (US)
(72) Inventor: NEWMAN, Carl, Stephen, Colchester, Essex CO2 8UF (GB); O'SULLIVAN, Pierce, London, E15 2AP (GB); JOHNSON, Steve, Brentwood, Essex CM15 9LJ (GB); WELLS, Ryan, South Woodham Ferrers, Essex CM15 9LJ (GB); WATTON, Sam, Rochester, Kent ME2 3HS (GB)
(74) Representative: Haseltine Lake Kempner LLP

(56) References cited:
- EP-A1- 2 570 629
- EP-A1- 2 918 789
- DE-A1- 4 213 047
- US-A1- 2017 342 880

## Description

### Technical Field

The present disclosure relates to turbocharger compressor housing and is particularly, although not exclusively, concerned with a turbocharger compressor housing configured to reduce freezing of crankcase ventilation gases.

### Background

Engines, e.g. for motor vehicles, often comprise a crankcase ventilation system configured to extract gases, e.g. blow-by gases, from inside the crankcase. The gases that are extracted from the crankcase may be reintroduced into the intake system to be drawn back into the engine cylinders.

In cold ambient temperatures, water within the crankcase ventilation gases can begin to freeze at or close to the point at which they are reintroduced into the intake system. Freezing of the crankcase ventilation gases can block the crankcase ventilation system, leading to a build-up of blow-by gases within the crankcase, which is undesirable.

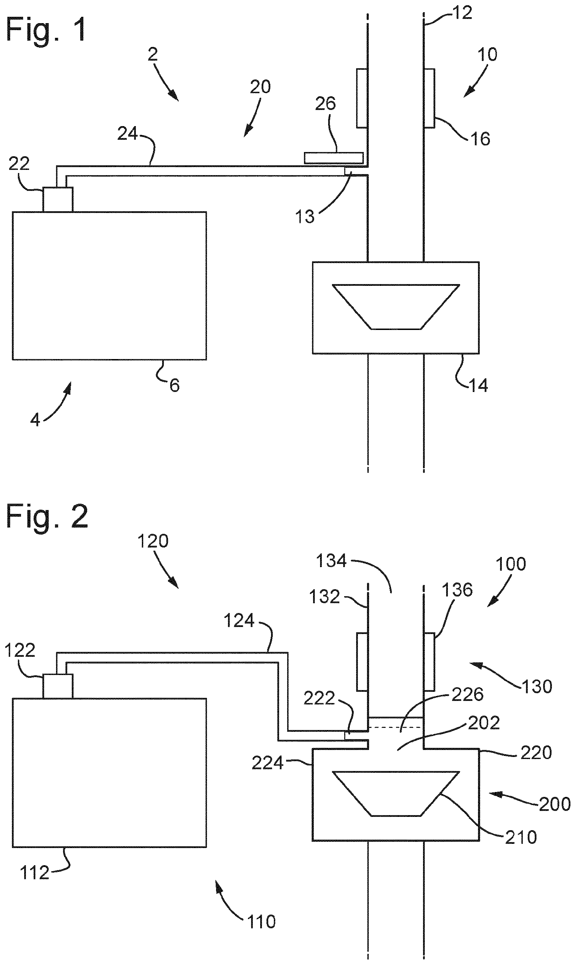

With reference to Figure 1, a previously proposed engine assembly 2 comprises an engine 4 including a crankcase 6, and an intake system 10. The intake system comprises an intake duct 12, a turbocharger compressor 14 and an intake resonator 16 for damping vibrations of the inlet gases within the intake duct 12 at a desired frequency, e.g. at which it is desirable to reduce noise within the intake system.

The engine assembly 2 further comprises a crankcase ventilation system 20 comprising a crankcase ventilation valve 22 coupled to the crankcase 6, and a crankcase ventilation duct 24 for carrying extracted crankcase ventilation gases from the crankcase ventilation valve 22 to the intake duct 12. The pressure within the intake duct 12 may be less than the pressure within the crankcase 6, and hence, blow-by gases within the crankcase 6 may be drawn through the crankcase ventilation valve 22 and the crankcase ventilation duct 24 into the intake duct 12.

As shown in Figure 1, the intake duct 12 comprises a spigot 13 formed on the intake duct. The crankcase ventilation duct 24 is fluidically coupled to the intake duct 12 at the spigot 13 and the crankcase ventilation gases are introduced into the intake duct 12 via the spigot 13.

In order to prevent the crankcase ventilation duct 24 from become blocked by ice forming in the crankcase ventilation duct 24, the crankcase ventilation system may further comprise a heater 26 configured to heat the crankcase ventilation duct 24 to raise the temperature of the crankcase ventilation gases and reduce the risk of water within the crankcase ventilation gases freezing.

Document US 2017/342880 discloses a housing of a compressor for an internal combustion engine including a first air inlet portion, a tubular wall defining an annular chamber along a circumference of the first air inlet portion.

Document EP 2 570 629 discloses a casing treatment including a recirculation passage and a mixing piping. The mixing pipe opens to the recirculation passage and has a return opening for introducing EGR gas and blow-by gas to the recirculation passage.

Document DE 42 13 047 discloses a radial compressor having an arrangement for influencing the main flow where a flow medium connection runs into the circulation chamber via one or more bores in the housing. The bore opens into one or more places in the circulation chamber. A flow medium can be introduced through the flow medium connection to give a required condition in the circulation chamber.

### Statements of Invention

According to an aspect of the present disclosure, there is provided a turbocharger compressor housing for a motor vehicle, the housing comprising:
a compressor housing portion for housing at least a portion of the turbocharger compressor, e.g. a rotor of the turbocharger compressor;
a compressor inlet duct portion for carrying a flow of inlet gases, e.g. from an intake duct, to an inlet of the turbocharger compressor; and
a crankcase ventilation pipe, e.g. a spigot for coupling a crankcase ventilation duct to the turbocharger compressor housing, in fluidic communication with the inlet of the turbocharger compressor, e.g. via the compressor inlet duct portion, intake duct and/or the compressor housing portion, the pipe for the introduction of crankcase ventilation gases into the turbocharger compressor, e.g. into the inlet of the compressor, wherein the pipe is integrally formed with the compressor housing portion, wherein the turbocharger compressor housing is a one-piece component, wherein the turbocharger compressor housing further comprises a crankcase ventilation inlet chamber extending about the compressor intake duct, wherein the crankcase ventilation inlet chamber is in fluidic communication with the inlet of the turbocharger compressor, and wherein the pipe is in fluidic communication with the crankcase ventilation inlet chamber, wherein the crankcase ventilation pipe comprises an inlet opening, an outlet opening and a duct portion extending between the inlet opening and the outlet opening, wherein a wall of the duct portion is in contact with a part of the compressor housing portion forming a wall of a compressor outlet volume.

The turbocharger housing may be a metal component.

The compressor housing portion may at least partially define an outlet volume, e.g. an outlet flow passage, of the turbocharger compressor, such as an outlet diffuser, volute or scroll. In other words, a portion of the turbocharger compressor housing may form a wall between the duct portion and the outlet volume. The duct portion may be formed by a first side of the wall and an outlet volume or outlet flow passage of the compressor housing portion may be formed by a second side of the wall, e.g. opposite the first side. The passage may be formed at an opposite end of the crankcase ventilation inlet chamber to an opening of the pipe into the crankcase ventilation inlet chamber.

At least a portion of a wall of the crankcase ventilation inlet chamber may be formed by the compressor inlet duct portion and/or the compressor housing portion, e.g. such that crankcase ventilation gases within the crankcase ventilation inlet chamber are in contact with the wall of the compressor intake duct and/or the compressor housing portion. For example an inner wall, e.g. an inner radial wall, of the crankcase ventilation inlet chamber may be formed by a wall of the compressor inlet duct portion. An axial end wall and/or an outer, e.g. radially outer, wall of the crankcase ventilation inlet chamber may be at least partially formed by the compressor housing portion.

A passage is formed between the crankcase ventilation inlet chamber and the compressor intake duct or the compressor housing portion. An opening of the passage into the crankcase ventilation inlet chamber may be spaced apart from an opening of the pipe into the crankcase ventilation inlet chamber along a wall of the of the crankcase ventilation inlet chamber formed by the compressor intake duct and/or the compressor housing portion.

The turbocharger compressor housing may further comprise a wall portion extending at least partially about the compressor intake duct. An outer, e.g. radially outer, wall of the crankcase ventilation inlet chamber may be at least partially formed by the wall portion. The wall portion may be integrally formed with the compressor housing portion.

The crankcase ventilation inlet chamber may be configured to damp pressure variations in the inlet air arriving at the compressor intake duct. For example, the volume of the crankcase ventilation inlet chamber may be tuned to act as an inlet resonator.

An intake assembly may comprise the above mentioned turbocharger compressor housing and an intake duct in fluidic communication with the compressor intake duct.

A wall of the crankcase ventilation inlet chamber may be at least partially formed by the intake duct. For example, an axial end wall of the crankcase ventilation inlet chamber may be at least partially formed by the intake duct. The intake duct may comprise a duct portion and a connector coupled to or integrally formed with the duct portion. The wall of the crankcase ventilation inlet chamber may be at least partially formed by the connector of the intake duct. At least a portion of an outer wall of the crankcase ventilation inlet chamber may be formed by the intake duct, e.g. a radially outer wall.

A motor vehicle may comprise the above-mentioned turbocharger compressor housing or the above-mentioned intake assembly.

### Brief Description of the Drawings

For a better understanding of the present invention, and to show more clearly how it may be carried into effect, reference will now be made, by way of example, to the accompanying drawings, in which:
Figure 1 is schematic view of a previously proposed engine assembly;
Figure 2 is a schematic view of an engine assembly according to the present invention;
Figure 3a and 3b are perspective views of a turbocharger compressor illustrating details of the present invention
Figure 4a is a perspective view of a turbocharger compressor assembly illustrating details of the present invention;
Figure 4b is a schematic, cross-sectional view of the turbocharger compressor assembly shown in Figure 4a;
Figure 5a is a perspective view of a turbocharger compressor assembly illustrating details of the present invention; and
Figure 5b is a schematic, cross-sectional view of a turbocharger compressor assembly shown in Figure 5a.

### Detailed Description

With reference to Figure 2 an engine assembly 100 for a motor vehicle, according to arrangements of the present disclosure comprises an engine 110, a crankcase ventilation system 120 and an intake system 130.

The engine 110 is similar to the engine 4 and comprises a crankcase 112. The crankcase ventilation system 120 is similar to the crankcase ventilation system 20 and comprises a crankcase ventilation valve 122, in fluidic communication with the interior of the crankcase 112, and a ventilation duct 124 for carrying extracted crankcase ventilation gases from the valve 122 to be reintroduced into the intake system 130, as described below.

The intake system 130 comprises turbocharger compressor assembly 200 and an intake duct 132 for carrying intake gases from an air inlet 134 to an inlet 202 of a turbocharger compressor, e.g. a compressor rotor 210 of the turbocharger compressor assembly 200. The intake system 130 may further comprise an intake resonator 136 that is similar to the intake resonator 16 described above.

The turbocharger compressor assembly 200 comprises the turbocharger compressor, e.g. the compressor rotor 210, and a turbocharger compressor housing 220. The turbocharger compressor housing 220 defines the turbocharger compressor inlet 202 and is configured to house the compressor rotor 210.

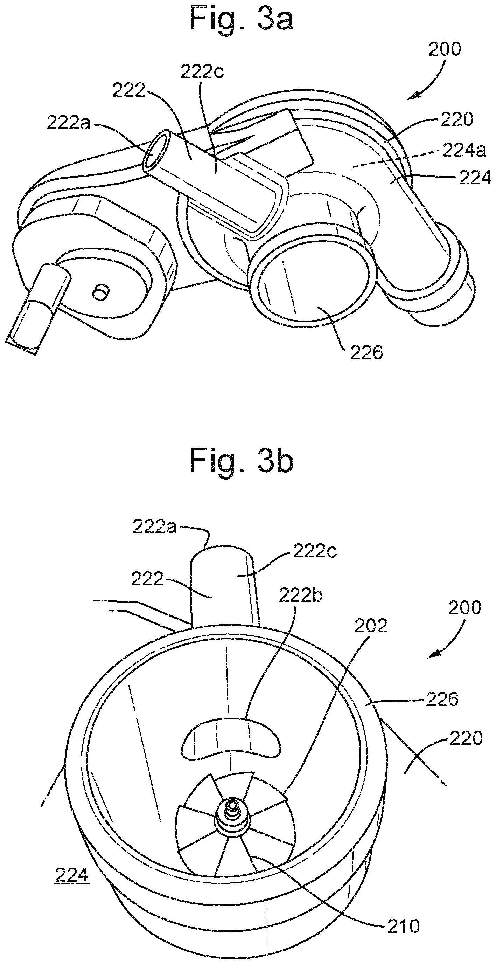

In the arrangement shown in Figure 2, the turbocharger compressor assembly is depicted as an axial flow machine. However, in other arrangements the turbocharger compressor may be a radial or mixed flow machine, e.g. an axial-to-radial flow machine, as depicted in Figure 3a.

The intake system 130 differs from the intake system 10 depicted in Figure 1 in that the intake resonator 136 does not comprise a spigot for introducing the crankcase ventilation gases into the intake system 130. Instead, a crankcase ventilation pipe, e.g. a crankcase ventilation spigot 222, is formed on the turbocharger compressor assembly 200 for the crankcase ventilation gases to be introduced into the intake system. As shown in Figure 2, the crankcase ventilation spigot 222 is formed on the turbocharger compressor housing 220.

With reference to Figures 3a and 3b, the crankcase ventilation spigot 222 is formed integrally with the turbocharger compressor housing 220. The turbocharger compressor housing comprises a compressor housing portion 224, configured to house at least a portion of the turbocharger compressor, e.g. the rotor 210 of the turbocharger compressor, and a compressor inlet duct portion 226 for carrying intake gases from the intake duct 132 to the inlet 202 of the turbocharger compressor.

The crankcase ventilation spigot 222 is formed integrally with the compressor housing portion 224 and/or the compressor inlet duct portion 226. As depicted, the compressor housing portion 224, the compressor inlet duct portion 226 and the crankcase ventilation spigot 222 are formed integrally with one another such that the turbocharger compressor housing 220 is a one-piece component. For example, the turbocharger compressor housing 220 may be a one-piece cast component.

The crankcase ventilation spigot 222 is formed from the same material as the compressor housing portion 224 and/or the compressor inlet duct portion 226. In particular, the crankcase ventilation spigot 222 may be manufactured from a metal material. Accordingly, heat may be transferred from the compressor housing portion 224 to the crankcase ventilation spigot 222 through heat conduction more effectively than if the crankcase ventilation spigot 222 was manufactured from a different material.

The compressor housing portion 224 at least partially defines an outlet volume 224a, e.g. a diffuser, volute or scroll of the turbocharger compressor. Gases within the outlet volume may have been heated by virtue of the action of the turbocharger compressor.

The compressor housing portion 224 may be heated by the gases within the outlet volume 224a.

Referring for Figures 3a and 3b, the crankcase ventilation spigot 222 comprises an inlet opening 222a, for receiving the crankcase ventilation gases from the crankcase ventilation duct 124, an outlet opening 222b, though which the crankcase ventilation gases enter the compressor inlet duct portion 226 or compressor housing portion 224, and a duct portion 222c extending between the inlet and outlet openings 222a, 222b.

As shown in Figure 3a, the crankcase ventilation spigot 222 is arranged such that a wall of the duct portion 222c is in contact with the compressor housing portion 224. According to the invention, the wall of the duct portion 222c is in contact with a part of the compressor housing portion 224 forming a wall of the compressor outlet volume 224a. The duct portion 222c is in contact, e.g. in direct contact, with the compressor housing portion 224a at a position on the duct portion 222c between the inlet opening 222a and the outlet opening 222b. In one or more arrangements, the duct portion 222c may be in contact, e.g. in direct contact, with the wall of the compressor housing portion, over a length of the duct portion 222c extending from or proximate to the outlet opening 222b towards the inlet opening 222a With reference to Figure 3b, the crankcase ventilation spigot 222 may be arranged such that the outlet opening 222b is adjacent, e.g. immediately adjacent, to the inlet 202 of the turbocharger compressor.

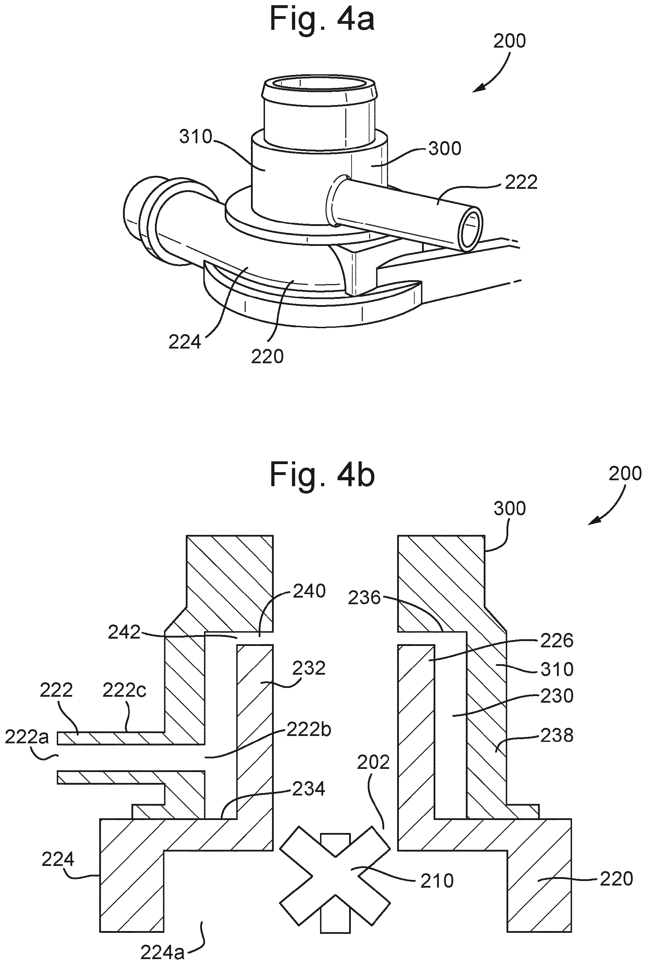

With reference to Figures 4a and 4b, the turbocharger compressor assembly 200 comprises a crankcase ventilation inlet chamber 230. The crankcase ventilation spigot 222 is in fluidic communication with the crankcase ventilation inlet chamber 230 and the crankcase ventilation gases are introduced into the crankcase ventilation inlet chamber 230 before flowing from the crankcase ventilation inlet chamber 230 into the compressor inlet duct portion 226 or compressor housing portion 224, e.g. via a passage 240 formed between the crankcase ventilation inlet chamber 230 and the compressor inlet duct portion 226 or compressor housing portion 224.

As shown, the crankcase ventilation inlet chamber 230 is arranged about the turbocharger compressor inlet 202. The crankcase ventilation inlet chamber 230 is arranged about the compressor inlet duct portion 226. For example, the crankcase ventilation inlet chamber 30 may comprise a toroidal volume defined about an axis that is substantially aligned with a central axis of the turbocharger compressor inlet duct portion 226, e.g. the direction of the flow of inlet gases into the turbocharger compressor.

At least a portion of a wall forming the crankcase ventilation inlet chamber 230 may be formed by, or integrally formed with, the compressor inlet duct portion 226 and/or the compressor housing portion 224. For example, as shown in Figure 4b, an inner, e.g. radially inner, wall 232 of the crankcase ventilation inlet chamber 230 may be formed by the compressor inlet duct portion 226. Additionally or alternatively, a first end wall 234, e.g. at a first axial end of the crankcase ventilation inlet chamber 230, may be formed by the compressor housing portion 224.

As described above, the compressor housing portion 224 may be heated by the gases within the outlet volume 224a of the compressor. The crankcase ventilation gases within the crankcase ventilation inlet chamber 230, which are in contact with the first end wall 234, may therefore be heated.

Additionally, the compressor inlet duct portion 226 is in thermal communication with the compressor housing portion 224 and is heated by the gases within the compressor outlet volume 224a through thermal conduction, e.g. via the material of the compressor housing portion 224. Accordingly, the crankcase ventilation gases within the crankcase ventilation inlet chamber 230, which are in contact with the inner wall 232, may be heated.

As shown in Figure 4b, the outlet opening 222b of the crankcase ventilation spigot 222 may be positioned at a first end, e.g. axial end, of the crankcase ventilation inlet chamber 230, e.g. adjacent to the first end wall 234. An opening 242 of the passage 240 into the crankcase ventilation inlet chamber 230 may be spaced apart from outlet opening 222b along a length of a wall of the crankcase ventilation inlet chamber 230 formed by the compressor inlet duct portion 226 and/or the compressor housing portion 224. For example, the opening 242 may be formed adjacent to a second end wall 236 of the inlet chamber 230, e.g. at a second (axial) end of the crankcase ventilation inlet chamber 230. The crankcase ventilation gases may therefore flow over the length of wall before flowing through the passage 240 into the compressor inlet duct portion 226 or the compressor housing portion 224.

As shown in Figures 4a and 4b, the turbocharger assembly may comprise a chamber forming part 300. The chamber forming part 300 may be coupled to the compressor housing 220. The chamber forming part 300 may comprise a hollow substantially cylindrical portion 310 positioned about the intake duct portion 226 of the compressor housing 220 when the chamber forming part 300 is coupled to the compressor housing 220. An outer, e.g. radially outer, wall 238 of the inlet chamber 230 may be formed by the chamber forming part 300, e.g. by the hollow cylindrical portion 310.

The crankcase ventilation spigot 222 may be coupled to or formed integrally with the chamber forming part 300. The outlet opening 222b of the crankcase ventilation spigot may be formed in the cylindrical portion 310 of the chamber forming part, e.g. in the outer wall 238 of the crankcase ventilation inlet chamber 230.

In the arrangement shown in Figures 4a and 4b, the chamber forming part 300 is configured to form the second end wall 236 of the crankcase ventilation inlet chamber 230. However in other arrangements, the second end wall 236 may be formed by the intake duct 132, as described below.

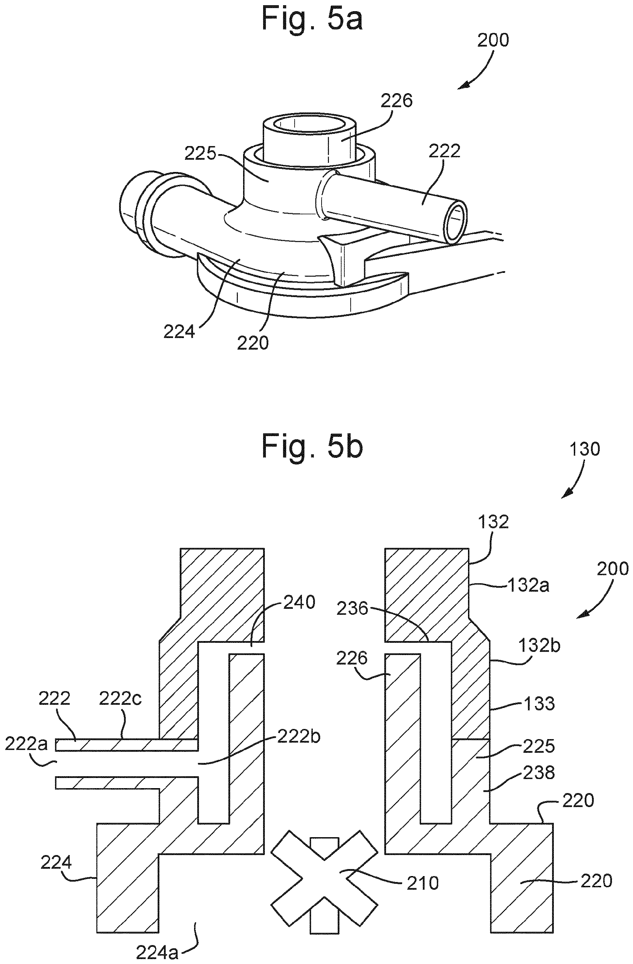

With reference to Figures 5a and 5b, in other arrangements of the disclosure, the turbocharger compressor housing 220, e.g. the compressor housing portion 224, may comprise a wall portion 225 extending about the compressor inlet duct portion 226 and spaced apart, e.g. radially apart, from the compressor inlet duct portion 226. At least part of the crankcase ventilation inlet chamber 230 is formed between the wall portion 225 and the compressor inlet duct portion 226. The wall portion 225 of the compressor housing therefore forms at least part of the outer wall 238 of the inlet chamber 230.

As depicted, when the compressor housing 220 comprises the wall portion 225, the crankcase ventilation spigot 222 may be coupled to or integrally formed with the wall portion 225. The outlet opening 222b of the spigot 222 may be formed through the wall portion 225 into the crankcase ventilation inlet chamber 230. The spigot 222 may thereby be formed integrally with the compressor housing portion 224, and optionally the compressor inlet duct portion 226.

In the arrangement shown in Figure 5b, the intake duct 132 comprises a chamber forming portion 133. The chamber forming portion 133 comprises a hollow, substantially cylindrical portion that extends about the compressor inlet duct portion 226 of the turbocharger compressor housing 220 when the intake duct 132 is coupled to the compressor inlet duct portion 226.

As depicted in Figure 5b, the chamber forming portion 133 of the intake duct 132 may form part of the outer wall 238 of the crankcase ventilation inlet chamber 230. The chamber forming portion 133 and the wall portion 225 of the compressor housing 220 may together form the outer wall 238 of the inlet chamber 230. Additionally, the chamber forming portion 133 of the intake duct 132 may at least partially form the second end wall 236 of the inlet chamber 230.

In other arrangements, the wall portion 225 may form, e.g. entirely form, the outer wall 238 and the chamber forming portion 133 of the intake duct 132 may form the second end wall 236 of the inlet chamber. Alternatively, the wall portion 225 may form, e.g. entirely form, the outer wall 238 and the second end wall 236 of the inlet chamber 230.

The chamber forming portion 133 may be formed integrally with the intake duct 132. In some arrangements, the intake duct 132 may comprise a duct portion 132a and a connection portion 132b for connecting the duct portion to the compressor inlet duct portion 226. The connection portion 132b may be coupled to or formed integrally with the duct portion 132a. The chamber forming portion 133 may be formed by the connection portion 132b.

Although in the arrangements shown in Figures 4b and 5b, the spigot 222 is spaced apart from the compressor housing portion 224, e.g. the part of the compressor housing portion forming the outlet volume 224a of the turbocharger compressor assembly 200, a wall of the duct portion 222c of the spigot 222 is in contact with the compressor housing portion 224. The spigot 222 is formed from the same material as the compressor housing portion 224 and compressor inlet duct portion 226, e.g. from a metal material.

In either of the arrangements shown in Figures 4a and 4b, and Figures 5a and 5b, the crankcase ventilation inlet chamber 230 may be tuned to act as an intake resonator for damping vibrations of inlet gases within the intake duct 132 at the desired frequency. In particular, the size of the crankcase ventilation inlet chamber 230 and/or the size of the passage 240 may be selected in order to damp vibrations of the inlet gases at the desired frequency. The intake resonator 136 shown in Figure 2 may therefore be omitted in arrangements of the engine assembly 100 comprising the compressor assembly 200 shown in Figures 4a and 4b or 5a and 5b.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A turbocharger compressor housing (220) for a motor vehicle, the housing comprising:
a compressor housing portion (224) for housing at least a portion of the turbocharger compressor;
a compressor inlet duct portion (226) for carrying a flow of inlet gases to an inlet (202) of the turbocharger compressor; and
a crankcase ventilation pipe (222) in fluidic communication with the inlet of the turbocharger compressor, the pipe for the introduction of crankcase ventilation gases into the turbocharger compressor, wherein the pipe is integrally formed with the compressor housing portion, wherein the turbocharger compressor housing is a one-piece component, wherein the turbocharger compressor housing further comprises a crankcase ventilation inlet chamber (230) configured to extend about a compressor intake duct (132), wherein the crankcase ventilation inlet chamber is in fluidic communication with the inlet of the turbocharger compressor, and wherein the pipe is in fluidic communication with the crankcase ventilation inlet chamber, wherein the crankcase ventilation pipe comprises an inlet opening (222a), an outlet opening (222b) and a duct portion (222c) extending between the inlet opening and the outlet opening, **characterized in that** a wall of the duct portion is in contact with a part of the compressor housing portion forming a wall of a compressor outlet volume (224a).

2. The turbocharger compressor housing (220) of claim 1, wherein the turbocharger compressor housing is a metal component.

3. The turbocharger compressor housing (220) of any of the preceding claims, wherein the compressor housing portion (224) at least partially defines an outlet flow passage of the turbocharger compressor.

4. The turbocharger compressor housing (220) according to any of the preceding claims, wherein at least a portion of a wall of the crankcase ventilation inlet chamber (230) is formed by the compressor housing portion (224).

5. The turbocharger compressor housing (220) of claim 4, wherein a passage (240) is formed between the crankcase ventilation inlet chamber (230) and the compressor housing portion (224), wherein an opening (242) of the passage into the crankcase ventilation inlet chamber is spaced apart from an opening of the pipe into the crankcase ventilation inlet chamber along a wall of the of the crankcase ventilation inlet chamber formed by the compressor intake duct and/or the compressor housing portion.

6. The turbocharger compressor housing (220) according to any of the preceding claims, wherein the turbocharger compressor housing further comprises a wall portion (225) extending at least partially about the compressor inlet duct portion (226), wherein an outer wall (238) of the crankcase ventilation inlet chamber (230) is at least partially formed by the wall portion.

7. The turbocharger compressor housing (220) according to claim 6, wherein the wall portion (225) is integrally formed with the compressor housing portion (224).

8. The turbocharger compressor housing (220) according to any of the preceding claims, wherein the crankcase ventilation inlet chamber (230) is configured to damp pressure variation in the inlet air arriving at the compressor inlet duct portion (226).

9. An intake assembly comprising the turbocharger compressor housing (220) according to any of the preceding claims and an intake duct (132) in fluidic communication with the compressor inlet duct portion (226).

10. The intake assembly of claim 9, wherein a wall of the crankcase ventilation inlet chamber (230) is at least partially formed by the intake duct (132).

11. The intake assembly of claim 10, wherein an axial end wall of the crankcase ventilation inlet chamber (230) is at least partially formed by the intake duct (132).

12. The intake assembly of claim 10 or 11, wherein at least a portion of an outer wall (238) of the crankcase ventilation inlet chamber (230) is formed by the intake duct (132).

13. A motor vehicle comprising the turbocharger compressor housing (220) of any of claims 1 to 8 or the intake assembly of any of claims 9 to 12.

## Patentansprüche

1. Ein Turboladerkompressorgehäuse (220) für ein Kraftfahrzeug, wobei das Gehäuse Folgendes umfasst:
einen Kompressorgehäuseabschnitt (224) zur Unterbringung von zumindest einem Abschnitt des Turboladerkompressors;
einen Kompressoreinlasskanalabschnitt (226) zum Leiten eines Stroms von Einlassgasen zu einem Einlass (202) des Turboladerkompressors; und
ein Kurbelgehäuseentlüftungsrohr (222) in Fluidkommunikation mit dem Einlass des Turboladerkompressors, wobei das Rohr zur Einführung von Kurbelgehäuseentlüftungsgasen in den Turboladerkompressor dient, wobei das Rohr integral mit dem Kompressorgehäuseabschnitt ausgebildet ist, wobei das Turboladerkompressorgehäuse eine einteilige Komponente ist, wobei das Turboladerkompressorgehäuse ferner eine Kurbelgehäuseentlüftungseinlasskammer (230) umfasst, die so konfiguriert ist, dass sie sich um einen Kompressoransaugkanal (132) erstreckt, wobei die Kurbelgehäuseentlüftungseinlasskammer in Fluidkommunikation mit dem Einlass des Turboladerkompressors steht, und wobei das Rohr in Fluidkommunikation mit der Kurbelgehäuseentlüftungseinlasskammer steht, wobei das Kurbelgehäuseentlüftungsrohr eine Einlassöffnung (222a), eine Auslassöffnung (222b) und einen Kanalabschnitt (222c) umfasst, der sich zwischen der Einlassöffnung und der Auslassöffnung erstreckt, **dadurch gekennzeichnet, dass** eine Wand des Kanalabschnitts in Kontakt mit einem Teil des Kompressorgehäuseabschnitts steht, der eine Wand eines Kompressorauslassvolumens (224a) bildet.

2. Das Turboladerkompressorgehäuse (220) nach Anspruch 1, wobei das Turboladerkompressorgehäuse eine Metallkomponente ist.

3. Das Turboladerkompressorgehäuse (220) gemäß einem der vorhergehenden Ansprüche, wobei der Kompressorgehäuseabschnitt (224) zumindest teilweise einen Auslassströmungskanal des Turboladerkompressors definiert.

4. Das Turboladerkompressorgehäuse (220) gemäß einem der vorhergehenden Ansprüche, wobei zumindest ein Teil einer Wand der Kurbelgehäuseentlüftungs-Einlasskammer (230) durch den Kompressorgehäuseabschnitt (224) gebildet ist.

5. Das Turboladerkompressorgehäuse (220) nach Anspruch 4, wobei ein Durchgang (240) zwischen der Kurbelgehäuseentlüftungseinlasskammer (230) und dem Kompressorgehäuseabschnitt (224) gebildet ist, wobei eine Öffnung (242) des Durchgangs in die Kurbelgehäuseentlüftungseinlasskammer von einer Öffnung des Rohrs in die Kurbelgehäuseentlüftungseinlasskammer entlang einer Wand der Kurbelgehäuseentlüftungseinlasskammer in Abstand gehalten ist, die durch den Kompressoransaugkanal und/oder den Kompressorgehäuseabschnitt gebildet wird.

6. Das Turboladerkompressorgehäuse (220) gemäß einem der vorhergehenden Ansprüche, wobei das Turboladerkompressorgehäuse außerdem einen Wandabschnitt (225) umfasst, der sich zumindest teilweise um den Kompressoreinlasskanalabschnitt (226) herum erstreckt, wobei eine Außenwand (238) der Kurbelgehäuseentlüftungseinlasskammer (230) zumindest teilweise durch den Wandabschnitt gebildet wird.

7. Das Turboladerkompressorgehäuse (220) nach Anspruch 6, wobei der Wandabschnitt (225) einstückig mit dem Kompressorgehäuseabschnitt (224) ausgebildet ist.

8. Das Turboladerkompressorgehäuse (220) gemäß einem der vorhergehenden Ansprüche, wobei die Einlasskammer (230) der Kurbelgehäuseentlüftung dazu ausgebildet ist, Druckschwankungen in der Einlassluft zu dämpfen, die am Kompressoreinlasskanalabschnitt (226) ankommt.

9. Eine Ansaugbaugruppe, die das Turboladerkompressorgehäuse (220) gemäß einem der vorhergehenden Ansprüche und einen Ansaugkanal (132) in Fluidverbindung mit dem Kompressoreinlasskanalabschnitt (226) umfasst.

10. Ansaugbaugruppe nach Anspruch 9, wobei eine Wand der Kurbelgehäuseentlüftungseinlasskammer (230) zumindest teilweise durch den Ansaugkanal (132) gebildet wird.

11. Ansaugbaugruppe nach Anspruch 10, wobei eine axiale Endwand der Kurbelgehäuseentlüftungseinlasskammer (230) zumindest teilweise durch den Ansaugkanal (132) gebildet wird.

12. Ansaugbaugruppe nach Anspruch 10 oder 11, wobei zumindest ein Abschnitt einer Außenwand (238) der Kurbelgehäuseentlüftungseinlasskammer (230) durch den Ansaugkanal (132) gebildet wird.

13. Ein Kraftfahrzeug, das das Turboladerkompressorgehäuse (220) gemäß einem der Ansprüche 1 bis 8 oder die Ansaugbaugruppe gemäß einem der Ansprüche 9 bis 12 umfasst.

## Revendications

1. Carter de compresseur de turbocompresseur (220) pour véhicule automobile, le carter comprenant :
une partie de carter de compresseur (224) destinée à loger au moins une partie du compresseur de turbocompresseur ;
une partie de conduit d'entrée de compresseur (226) destinée à acheminer un flux de gaz d'entrée vers une entrée (202) du compresseur de turbocompresseur ; et
un tuyau de ventilation du carter (222) en communication fluidique avec l'entrée du compresseur de turbocompresseur, le tuyau pour l'introduction de gaz de ventilation du carter dans le compresseur de turbocompresseur, dans lequel le tuyau est intégralement formé avec la partie de carter de compresseur, dans lequel le carter de compresseur de turbocompresseur est un composant monobloc, dans lequel le carter de compresseur de turbocompresseur comprend en outre une chambre d'entrée de ventilation du carter (230) conçue pour s'étendre autour d'un conduit d'aération de compresseur (132), dans lequel la chambre d'entrée de ventilation du carter est en communication fluidique avec l'entrée du compresseur de turbocompresseur, et dans lequel le tuyau est en communication fluidique avec la chambre d'entrée de ventilation du carter, dans lequel le tuyau de ventilation du carter comprend une ouverture d'entrée (222a), une ouverture de sortie (222b) et une partie de conduit (222c) s'étendant entre l'ouverture d'entrée et l'ouverture de sortie, **caractérisé en ce qu'**une paroi de la partie de conduit est en contact avec une partie de la partie de carter du compresseur formant une paroi d'un volume de sortie du compresseur (224a).

2. Carter de compresseur de turbocompresseur (220) selon la revendication 1, dans lequel le carter de compresseur de turbocompresseur est un composant métallique.

3. Carter de compresseur de turbocompresseur (220) selon l'une quelconque des revendications précédentes, dans lequel la partie de carter de compresseur (224) définit au moins partiellement un passage d'écoulement de sortie du compresseur de turbocompresseur.

4. Carter de compresseur de turbocompresseur (220) selon l'une quelconque des revendications précédentes, dans lequel au moins une partie d'une paroi de la chambre d'entrée de ventilation du carter (230) est formée par la partie de carter de compresseur (224).

5. Carter de compresseur de turbocompresseur (220) selon la revendication 4, dans lequel un passage (240) est formé entre la chambre d'entrée de ventilation du carter (230) et la partie de carter de compresseur (224), dans lequel une ouverture (242) du passage dans la chambre d'entrée de ventilation du carter est espacée d'une ouverture du tuyau dans la chambre d'entrée de ventilation du carter le long d'une paroi de la chambre d'entrée de ventilation du carter formée par le conduit d'aération du compresseur et/ou la partie de carter de compresseur.

6. Carter de compresseur de turbocompresseur (220) selon l'une quelconque des revendications précédentes, dans lequel le carter de compresseur de turbocompresseur comprend en outre une partie de paroi (225) s'étendant au moins partiellement autour de la partie de conduit d'entrée de compresseur (226), dans lequel une paroi externe (238) de la chambre d'entrée de ventilation du carter (230) est au moins partiellement formée par la partie de paroi.

7. Carter de compresseur de turbocompresseur (220) selon la revendication 6, dans lequel la partie de paroi (225) est intégralement formée avec la partie de carter de compresseur (224) .

8. Carter de compresseur de turbocompresseur (220) selon l'une quelconque des revendications précédentes, dans lequel la chambre d'entrée de ventilation du carter (230) est conçue pour amortir la variation de pression dans l'air d'entrée arrivant à la partie de conduit d'entrée du compresseur (226).

9. Ensemble d'aération comprenant le carter de compresseur de turbocompresseur (220) selon l'une quelconque des revendications précédentes et un conduit d'aération (132) en communication fluidique avec la partie de conduit d'entrée du compresseur (226).

10. Ensemble d'aération selon la revendication 9, dans lequel une paroi de la chambre d'entrée de ventilation du carter (230) est au moins partiellement formée par le conduit d'aération (132).

11. Ensemble d'aération selon la revendication 10, dans lequel une paroi d'extrémité axiale de la chambre d'entrée de ventilation du carter (230) est au moins partiellement formée par le conduit d'aération (132).

12. Ensemble d'aération selon la revendication 10 ou 11, dans lequel au moins une partie d'une paroi externe (238) de la chambre d'entrée de ventilation du carter (230) est formée par le conduit d'aération (132).

13. Véhicule automobile comprenant le carter de compresseur de turbocompresseur (220) selon l'une quelconque des revendications 1 à 8 ou l'ensemble d'aération selon l'une quelconque des revendications 9 à 12.
